# EUROPEAN PATENT APPLICATION

(11) **EP 2 658 145 A2**
(43) Date of publication of application: **30.10.2013**
(21) Application number: 11850263.2
(22) Date of filing: 19.12.2011
(51) Int. Cl.: H04B 7/26

(54) **METHOD AND DEVICE FOR CONFIGURING FRAMES FOR DEVICE COOPERATION IN WIRELESS COMMUNICATION SYSTEM**

(30) Priority: 20.12.2010 US 201061425201 P
(71) Applicant: LG Electronics Inc., Yeongdeungpo-gu Seoul 150-721 (KR)
(72) Inventor: PARK, Kyu Jin, Anyang-si Gyeonggi-do 431-749 (KR); CHO, Han Gyu, Anyang-si Gyeonggi-do 431-749 (KR); KWAK, Jin Sam, Anyang-si Gyeonggi-do 431-749 (KR)
(74) Representative: Frenkel, Matthias Alexander
(86) International application number: PCT/KR2011/009787
(87) International publication number: WO 2012/086980

(57) **Abstract**

Disclosed are a method and a device for transmitting uplink (UL) data in a wireless communication system. A cooperative device receives said UL data from a source device through a listening interval which is set within a TDD frame of said cooperative device, and transmits said UL data received from said source device to a base station through a UL subframe within the TDD frame of said cooperative device. At this time, said listening interval is overlapped with the UL subframe within the TDD frame of said source device.

## Description

### BACKGROUND OF THE INVENTION

### Field of the Invention

The present invention relates to wireless communication and, more particularly, to a method and apparatus for configuring frames for device cooperation in a wireless communication system.

### Related Art

The institute of electrical and electronics engineers (IEEE) 802.16e standard was adopted in 2007 as a sixth standard for international mobile telecommunication (IMT)-2000 in the name of 'WMAN-OFDMA TDD' by the ITU-radio communication sector (ITU-R) which is one of sectors of the international telecommunication union (ITU). An IMT-advanced system has been prepared by the ITU-R as a next generation (i.e., 4th generation) mobile communication standard following the IMT-2000. It was determined by the IEEE 802.16 working group (WG) to conduct the 802.16m project for the purpose of creating an amendment standard of the existing IEEE 802.16e as a standard for the IMT-advanced system. As can be seen in the purpose above, the 802.16m standard has two aspects, that is, continuity from the past (i.e., the amendment of the existing 802.16e standard) and continuity to the future (i.e., the standard for the next generation IMT-advanced system). Therefore, the 802.16m standard needs to satisfy all requirements for the IMT-advanced system while maintaining compatibility with a mobile WiMAX system conforming to the 802.16e standard.

An optimized IEEE 802.16p standard is being developed based on an IEEE 802.16e standard and an IEEE 802.16m standard for machine-to-machine (M2M) communication. M2M communication can be defined as an information exchange performed between a subscriber station and a server or between subscriber stations within a core network without any interaction with a person. In the IEEE 802.16p standard, the enhancement of medium access control (MAC) of the IEEE 802.16 standard and a minimum change of an orthogonal frequency division multiple access (OFDMA) physical layer (PHY) within a licensed band are being discussed. As the IEEE 802.16p standard is discussed, wide area wireless coverage is required within the licensed band and the application scope of automated M2M communication can be widened for the purposes of observation and control.

In general, when accessing a network, an M2M application requires different requirements from those for human-initiated or human-controlled network access. An M2M application can include vehicular telematics, the healthcare monitoring of bio-sensors, remote maintenance and control, smart metering, automated service for consumer devices, etc. The requirements for an M2M application can include very lower power consumption, larger numbers of devices, short burst transmission, device tampering detection and reporting, improved device authentication, etc.

Meanwhile, device cooperation technology can be introduced into in the IEEE 802.16p standard. Device cooperation refers to technology in which a specific device helps the transmission of other devices. A demand for device cooperation technology is increased in the IEEE 802.16p standard owing to the low power consumption characteristic of an M2M device. The IEEE 802.16p standard can support device cooperation without defining a new peer-to-peer (P2P) connection. That is, the transmission of all devices can be terminated at a base station.

There is a need for a new frame structure for supporting device cooperation technology.

### SUMMARY OF THE INVENTION

The present invention provides a method and apparatus for configuring frames for device cooperation in a wireless communication system. The present invention proposes a method of a cooperative device transmitting UL data when device cooperation technology is introduced into a wireless communication system.

In an aspect, a method of a transmitting, by a cooperative device, uplink (UL) data in a wireless communication system is provided. The method includes receiving UL data from a source device through a listening interval configured within a TDD frame of the cooperative device, and transmitting the UL data, received from the source device, to a base station through a UL subframe within the TDD frame of the cooperative device. The listening interval overlaps with a UL subframe within a TDD frame of the source device.

The TDD frame of the cooperative device may be configured by the base station in a user equipment (UE)-specific manner.

A number of DL subframes within the TDD frame of the cooperative device may be n greater than a number of DL subframes within the TDD frame of the source device, and a number of the UL subframes within the TDD frame of the cooperative device may be n smaller than the number of DL subframes within the TDD frame of the source device.

The listening interval may be last n DL subframes within the TDD frame of the cooperative device.

The UL data may be received from the source device in an even-numbered frame, and the UL data received in the even-numbered frame may be transmitted to the base station in an odd-numbered frame.

A number of DL subframes within the TDD frame of the cooperative device may be n smaller than a number of DL subframes within the TDD frame of the source device, and a number of the UL subframes within the TDD frame of the cooperative device may be n greater than the number of DL subframes within the TDD frame of the source device.

The listening interval may be last n DL subframes within the TDD frame of the cooperative device.

The TDD frame of the cooperative device may be divided into OFF duration and ON duration, the listening interval may be an UL subframe within the ON duration of the TDD frame of the cooperative device, and the OFF duration may be duration in which data cannot be transmitted and the ON duration is duration in which data can be transmitted.

The OFF duration and the ON duration of the TDD frame of the cooperative device may be configured for each frame.

The OFF duration of the TDD frame of the cooperative device may overlap with ON duration of the TDD frame of the source device, and the ON duration of the TDD frame of the cooperative device may overlap with OFF duration of the TDD frame of the source device.

The method may further include receiving a non-acknowledgement (NACK) signal, corresponding to the UL data, from the base station during the ON duration within the TDD frame of the cooperative device before transmitting the UL data received from the source device to the base station.

The method may further include receiving an acknowledgement (ACK) signal, corresponding to the UL data transmitted to the base station, from the base station during the ON duration within the TDD frame of the cooperative device.

The method may further include receiving a NACK signal, corresponding to the UL data transmitted to the base station, from the base station during the ON duration within the TDD frame of the cooperative device.

The method may further include receiving retransmission data of the UL data from the source device through the listening interval, and retransmitting the retransmission data to the base station through the ON duration within the TDD frame of the cooperative device.

In another aspect, a cooperative device in a wireless communication system is provided. The cooperative device includes a radio frequency (RF) unit transmitting or receiving a radio signal, and a processor coupled with the RF unit, and configured for receiving UL data from a source device through a listening interval configured within a TDD frame of the cooperative device, and transmitting the UL data, received from the source device, to a base station through a UL subframe within the TDD frame of the cooperative device. The listening interval overlaps with a UL subframe within a TDD frame of the source device.

Device cooperation can be performed efficiently through a newly configured frame structure.

### BRIEF DESCRIPTION OF THE DRAWINGS

FIG. 1 shows a wireless communication system.

FIG. 2 shows device cooperation technology.

FIG. 3 shows an example of a frame structure in IEEE 802.16m.

FIG. 4 shows an example of a TDD frame structure in IEEE 802.16m.

FIG. 5 shows an example of a TDD frame structure in 3GPP LTE.

FIG. 6 shows an example of frame structures of a BS, a cooperative device, and a source device according to an embodiment of the present invention.

FIG. 7 shows another example of frame structures of a BS, a cooperative device, and a source device according to an embodiment of the present invention.

FIG. 8 shows another example of frame structures of a BS, a cooperative device, and a source device according to an embodiment of the present invention.

FIG. 9 shows an example of a method of transmitting UL data according to an embodiment of the present invention.

FIG. 10 shows another example of frame structures of a BS, a cooperative device, and a source device according to an embodiment of the present invention.

FIG. 11 shows an example of TDD DL HARQ timing in IEEE 802.16m.

FIG. 12 shows an example of TDD UL HARQ timing in IEEE 802.16m.

FIG. 13 shows an example of DL HARQ timing of a source device according to an embodiment of the present invention.

FIG. 14 shows an example of HARQ timing of a source device according to an embodiment of the present invention.

FIG. 15 shows an example of HARQ timing of a cooperative device according to an embodiment of the present invention.

FIG. 16 shows an example of HARQ timing of a cooperative device according to an embodiment of the present invention.

FIG. 17 shows an example of UL HARQ timeline of a source device according to an embodiment of the present invention.

FIG. 18 shows another example of UL HARQ timeline of a source device according to an embodiment of the present invention.

FIG. 19 is a block diagram showing wireless communication system to implement an embodiment of the present invention.

### DESCRIPTION OF EXEMPLARY EMBODIMENTS

A technology below can be used in a variety of wireless communication systems, such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented using radio technology, such as universal terrestrial radio access (UTRA) or CDMA2000. TDMA can be implemented using radio technology, such as global system for mobile communications (GSM)/general packet radio service (GPRS)/enhanced data rates for GSM evolution (EDGE). OFDMA can be implemented using radio technology, such as IEEE 802.11(Wi-Fi), IEEE 802.16(WiMAX), IEEE 802-20, or Evolved UTRA (E-UTRA). IEEE 802.16m is the evolution of IEEE 802.16e, and it provides a backward compatibility with an IEEE 802.16e-based system. IEEE 802.16p is based on IEEE 802.16e or IEEE 802.16m, and is a standard for communication between machine to machine (M2M) devices. UTRA is part of a universal mobile telecommunications system (UMTS). 3rd generation partnership project (3GPP) long term evolution (LTE) is part of evolved UMTS (E-UMTS) using evolved-UMTS terrestrial radio access (E-UTRA), and it adopts OFDMA in downlink (DL) and SC-FDMA in uplink (UL). LTE-A (advanced) is the evolution of 3GPP LTE.

IEEE 802.16m is chiefly described as an example in order to clarify the description, but the technical spirit of the present invention is not limited to IEEE 802.16m.

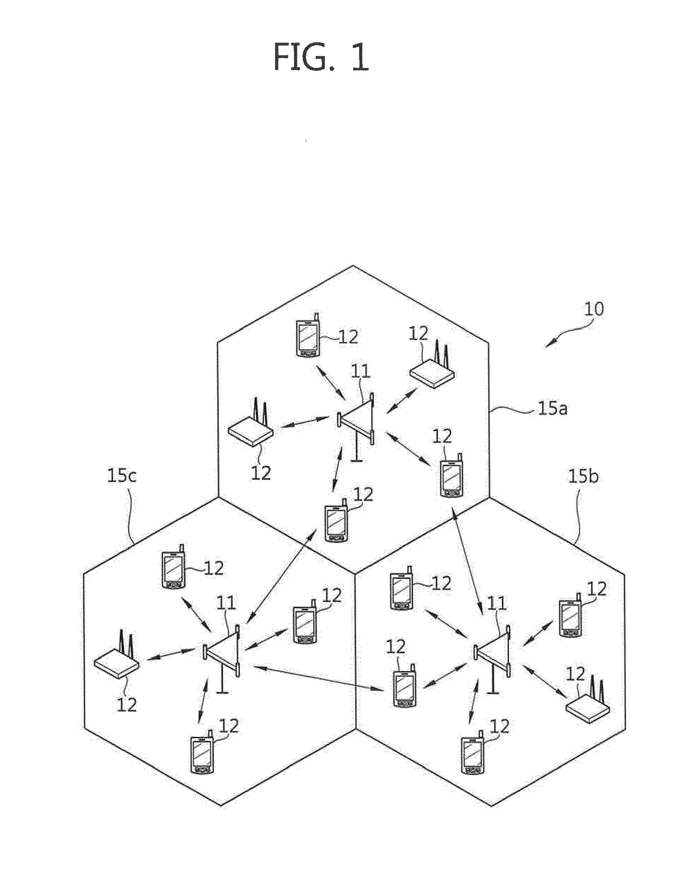

FIG. 1 shows a wireless communication system.

Referring to FIG. 1, the wireless communication system 10 includes one or more base stations (BSs) 11. The BSs 11 provide communication services to respective geographical areas (in general called 'cells') 15a, 15b, and 15c. Each of the cells can be divided into a number of areas (called 'sectors'). A user equipment (UE) 12 can be fixed or mobile and may be referred to as another terminology, such as a mobile station (MS), a mobile terminal (MT), a user terminal (UT), a subscriber station (SS), a wireless device, a personal digital assistant (PDA), a wireless modem, or a handheld device. In general, the BS 11 refers to a fixed station that communicates with the UEs 12, and it may be referred to as another terminology, such as an evolved-NodeB (eNB), a base transceiver system (BTS), or an access point.

The UE generally belongs to one cell. A cell to which a UE belongs is called a serving cell. A BS providing the serving cell with communication services is called a serving BS. A wireless communication system is a cellular system, and so it includes other cells neighboring a serving cell. Other cells neighboring the serving cell are called neighbor cells. A BS providing the neighbor cells with communication services is called as a neighbor BS. The serving cell and the neighbor cells are relatively determined on the basis of a UE.

This technology can be used in the downlink (DL) or the uplink (UL). In general, DL refers to communication from the BS 11 to the UE 12, and UL refers to communication from the UE 12 to the BS 11. In the DL, a transmitter may be part of the BS 11 and a receiver may be part of the UE 12. In the UL, a transmitter may be part of the UE 12 and a receiver may be part of the BS 11.

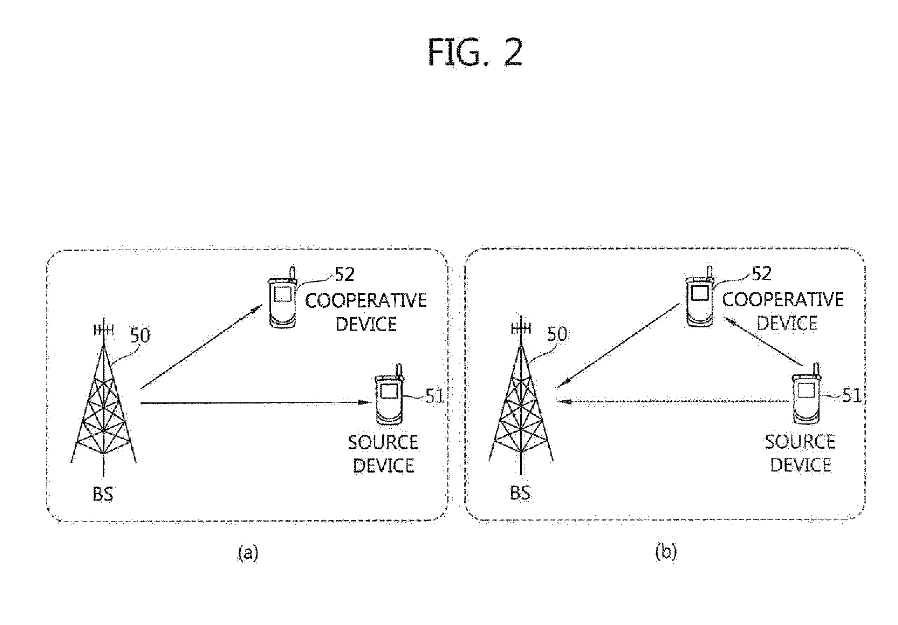

FIG. 2 shows device cooperation technology.

FIG. 2(a) shows device cooperation technology in DL. A BS 50 directly transmits data and a control signal to a source device 51 and a cooperative device 52. That is, device cooperation technology in DL is the same as common DL transmission. The source device 51 and the cooperative device 52 normally operate. Or, the cooperative device 52 may relay the data and/or the control signal, received from the BS, to the source device 51.

FIG. 2(b) shows device cooperation technology in UL. In FIG. 2(b), data and/or a control signal transmitted by a source device 51 is relayed by a cooperative device 52. The cooperative device 52 transmits the data and/or the control signal received from the source device 51 and its own data and/or control signal to a BS 50.

That is, the source device can be said to be a device for generating data traffic transmitted to the BS or a device that is an object of data traffic generated from the BS. The cooperative device can be said to be a device that helps the source device in UL and the BS in DL by relaying data and/or a control signal or transmitting data and/or a control signal in common. In the following description, it is assumed that device cooperation technology is applied to only UL, but not limited thereto.

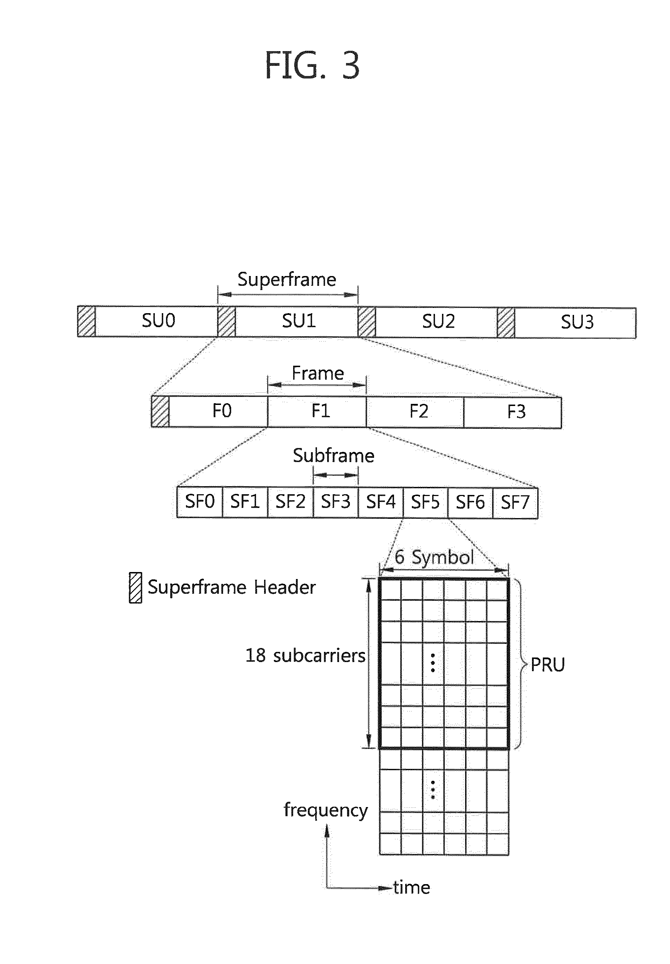

FIG. 3 shows an example of a frame structure in IEEE 802.16m.

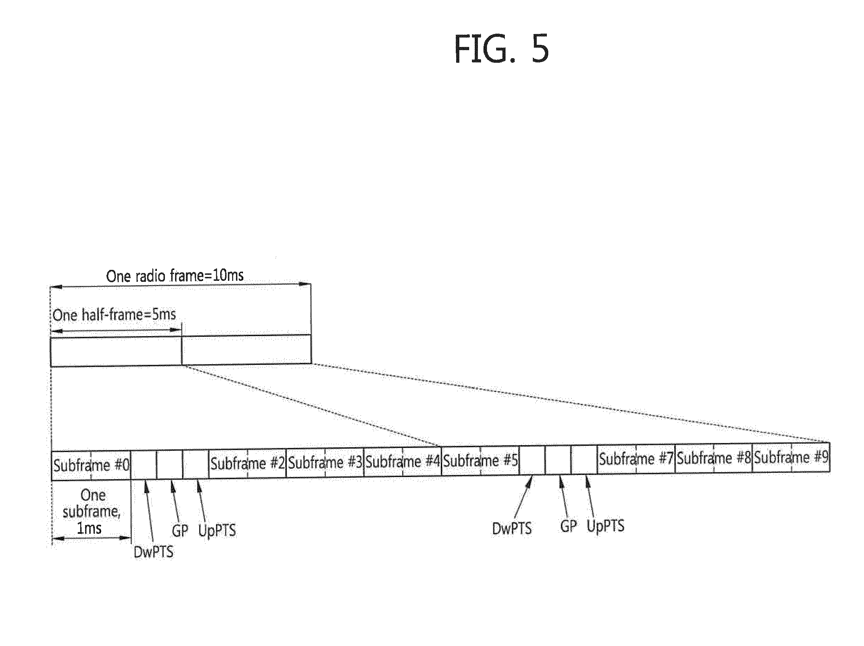

Referring to FIG. 5, a superframe (SF) includes a superframe header (SFH) and four frames F0, F1, F2, and F3. Each frame may have the same length in the SF. Although it is shown that each SF has a size of 20 milliseconds (ms) and each frame has a size of 5 ms, the present invention is not limited thereto. A length of the SF, the number of frames included in the SF, the number of SFs included in the frame, or the like may change variously. The number of SFs included in the frame may change variously according to a channel bandwidth and a cyclic prefix (CP) length.

One frame includes 8 subframes SF0, SF1, SF2, SF3, SF4, SF5, SF6, and SF7. Each subframe can be used for UL or DL transmission. One subframe includes a plurality of orthogonal frequency division multiplexing (OFDM) symbols or orthogonal frequency division multiple access (OFDMA) symbols in a time domain, and includes a plurality of subcarriers in a frequency domain. An OFDM symbol is for representing one symbol period, and can be referred to as other terminologies such as an OFDMA symbol, an SC-FDMA symbol, etc., according to a multiple access scheme. The subframe can consist of 5, 6, 7, or 9 OFDMA symbols. However, this is for exemplary purposes only, and thus the number of OFDMA symbols included in the subframe is not limited thereto. The number of OFDMA symbols included in the subframe may change variously according to a channel bandwidth and a CP length. A subframe type may be defined according to the number of OFDMA symbols included in the subframe. For example, it can be defined such that a type-1 subframe includes 6 OFDMA symbols, a type-2 subframe includes 7 OFDMA symbols, a type-3 subframe includes 5 OFDMA symbols, and a type-4 subframe includes 9 OFDMA symbols. One frame may include subframes each having the same type. Alternatively, one frame may include subframes each having a different type. That is, the number of OFDMA symbols included in each subframe may be identical or different in one frame. Alternatively, the number of OFDMA symbols included in at least one subframe of one frame may be different from the number of OFDMA symbols of the remaining subframes of the frame.

Time division duplex (TDD) or frequency division duplex (FDD) can be applied to the frame. In the TDD, each subframe is used in UL or DL transmission at the same frequency and at a different time. That is, subframes included in a TDD frame are divided into a UL subframe and a DL subframe in the time domain. In the FDD, each subframe is used in UL or DL transmission at the same time and at a different frequency. That is, subframes included in an FDD frame are divided into a UL subframe and a DL subframe in the frequency domain. UL transmission and DL transmission occupy different frequency bands and can be simultaneously performed.

One OFDMA symbol includes a plurality of subcarriers, and the number of subcarriers is determined according to a fast Fourier transform (FFT) size. There are several types of subcarriers. A subcarrier type may include a data subcarrier for data transmission, a pilot subcarrier for various estimations, and a null carrier for a guard band and a DC carrier. A parameter for characterizing an OFDMA symbol includes BW, N_{used}, n, G, etc. BW denotes a nominal channel bandwidth. N_{used} denotes the number of subcarriers in use (including a DC subcarrier). n denotes a sampling factor. This parameter is used to determine a subcarrier spacing and a useful symbol time together with BW and N_{used}. G denotes a ratio of a CP time and a useful time.

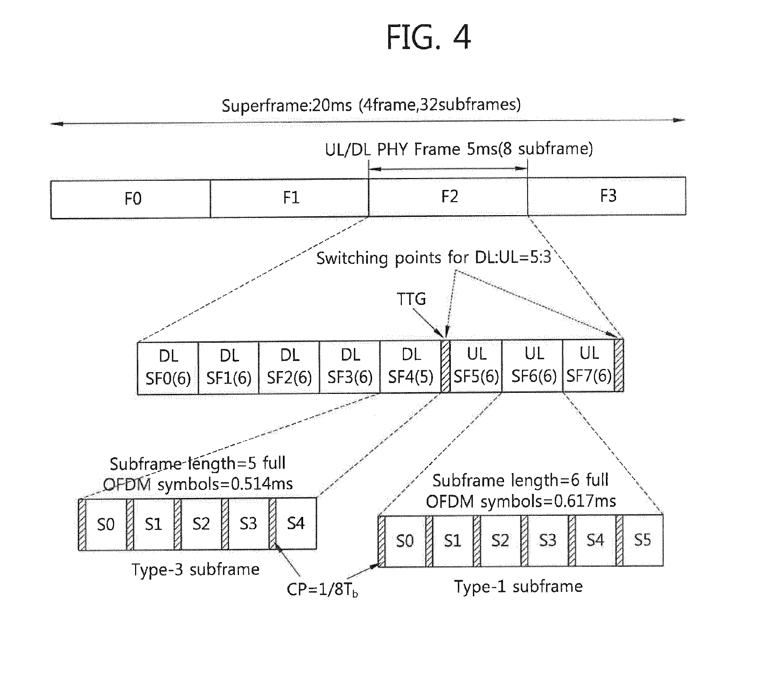

Table 1 below shows an OFDMA parameter. The OFDMA parameter of Table 1 can equally apply to the 802.163 frame structure of FIG. 4

**[Table 1]**

| | | | | | | | |
|---|---|---|---|---|---|---|---|
| Channel bandwidth, BW(MHz) | | | 5 | 7 | 8.75 | 10 | 20 |
| Sampling factor, n | | | 28/25 | 8/7 | 8/7 | 28/25 | 28/25 |
| Sampling frequency, Fₛ(MHz) | | | 5.6 | 8 | 10 | 11.2 | 22.4 |
| FFT size, N_{FFT} | | | 512 | 1024 | 1024 | 1024 | 2048 |
| Subcarrier spacing, Δf(kHz) | | | 10.94 | 7.81 | 9.77 | 10.94 | 10.94 |
| Useful symbol time, T_{b}(µs) | | | 91.4 | 128 | 102.4 | 91.4 | 91.4 |
| G=1/8 | Symbol time, Tₛ(µs) | | 102.857 | 144 | 115.2 | 102.857 | 102.857 |
| | FDD | Number of ODFMA symbols per 5ms frame | 48 | 34 | 43 | 48 | 48 |
| | | Idle time(µs) | 62.857 | 104 | 46.40 | 62.857 | 62.857 |
| | TDD | Number of ODFMA symbols per 5ms frame | 47 | 33 | 42 | 47 | 47 |
| | | TTG+RTG(µs) | 165.714 | 248 | 161.6 | 165.714 | 165.714 |
| G=1/16 | Symbol time, Tₛ(µs) | | 97.143 | 136 | 108.8 | 97.143 | 97.143 |
| | FDD | Number of ODFMA symbols per 5ms frame | 51 | 36 | 45 | 51 | 51 |
| | | Idle time(µs) | 45.71 | 104 | 104 | 45.71 | 45.71 |
| | TDD | Number of ODFMA symbols per 5ms frame | 50 | 35 | 44 | 50 | 50 |
| | | TTG+RTG(µs) | 142.853 | 240 | 212.8 | 142.853 | 142.853 |
| G=1/4 | Symbol time, Tₛ(µs) | | 114.286 | 160 | 128 | 114.286 | 114.286 |
| | FDD | Number of ODFMA symbols per 5ms frame | 43 | 31 | 39 | 43 | 43 |
| | | Idle time(µs) | 85.694 | 40 | 8 | 85.694 | 85.694 |
| | TDD | Number of | 42 | 30 | 38 | 42 | 42 |
| | | ODFMA symbols per 5ms frame | | | | | |
| | | TTG+RTG(µs) | 199.98 | 200 | 136 | 199.98 | 199.98 |
| Number of Guard subcarriers | | Left | 40 | 80 | 80 | 80 | 160 |
| | | Right | 39 | 79 | 79 | 79 | 159 |
| Number of used subcarriers | | | 433 | 865 | 865 | 865 | 1729 |
| Number of PRU in type-1 subframe | | | 24 | 48 | 48 | 48 | 96 |

In Table 1, N_{FFT} is smallest power of two greater than N_{used}. A sampling factor Fₛ is floor(n·BW/8000)×8000, a subcarrier spacing Δf is Fₛ/N_{FFT}, a useful symbol time T_{b} is 1/Δ, a CP time Tg is G·T_{b}, an OFDMA symbol time Tₛ is T_{b}+T_{g}, and a sampling time is T_{b}/N_{FFT}.

FIG. 4 shows an example of a TDD frame structure in IEEE 802.16m.

The TDD frame of FIG. 4 shows a case where G=1/8. A superframe having a length of 20 ms is formed of four frames F0, F1, F2, and F3 each having a length of 5 ms. One frame is formed of eight subframes SF0, SF1, SF2, SF3, SF4, SF5, SF6, and SF7, and a ratio of DL subframe and UL subframe is 5:3. The TDD frame structure of FIG. 4 can be applied to a case where a bandwidth is 5 MHz, 10 MHz, or 20 MHz. SF4, that is, the last DL subframe, includes 5 OFDM symbols, and the remaining subframes include 6 subframes.

FIG. 5 shows an example of a TDD frame structure in 3GPP LTE.

It may be referred to Paragraph 4.2 of 3GPP TS 36.211 V8.2.0 (2008-03) "Technical Specification Group Radio Access Network; Evolved Universal Terrestrial Radio Access (E-UTRA); Physical Channels and Modulation (Release 8)". One radio frame has a length of 10 ms and includes two half-frames each having a length of 5 ms. Furthermore, one half-frame includes 5 subframes each having a length of 1 ms.

One subframe is designated as any one of an UL subframe, a DL subframe, and a special subframe. Table 2 shows the structure of a frame that can be configured depending on the arrangement of UL subframes and DL subframes in a 3GPP LTE TDD system. In Table 2, 'D' denotes a DL subframe, 'U' denotes an UL subframe, and 'S' denotes a special subframe.

**[Table 2]**

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

J A configuration having switch-point periodicity ot 5 ms and a configuration having switch-point periodicity of 10 ms may be present. If the switch-point periodicity is 5 ms, a special subframe can be present in two half-frames within one sub frame. If the switch-point periodicity is 10 ms, a special subframe can be present only in the first half-frame.

A special subframe is a specific period for separating UL and DL between an UL subframe and a DL subframe. At least one special subframe is present in one radio frame, and a special subframe includes a downlink pilot time slot (DwPTS), a guard period (GP), and an uplink pilot time slot (UpPTS). The DwPTS is used for initial cell search, synchronization, or channel estimation. The UpPTS is used for channel estimation in a BS and is used to set up UL transmission synchronization for UE. The GP is a guard interval for removing interference generated in UL due the multipath delay of a DL signal between UL and DL. Table 3 shows the lengths of a DwPTS, a GP, and an UpPTS according to the configuration of a special subframe.

**[Table 3]**

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | 6592*Ts | 2192*Ts | 2560*Ts | 7680*Ts | 2192*Ts | 2560*Ts |
| 1 | 19760*Ts | | | 20480*Ts | | |
| 2 | 21952*Ts | | | 23040*Ts | | |
| 3 | 24144*Ts | | | 25600*Ts | | |
| 4 | 26336*Ts | | | 7680*Ts | | |
| 5 | 6592*Ts | 4384*Ts | 5120*ts | 20480*Ts | 4384*Ts | 5120*ts |
| 6 | 19760*Ts | | | 23040*Ts | | |
| 7 | 21952*Ts | | | - | | |
| 8 | 24144*Ts | | | - | | |

The DwPTSs of a subframe 0, a subframe 5, and a special subframe are always assigned to DL transmission. The UpPTS of a special subframe and a subframe following a special subframe are always assigned to UL transmission.

A method of configuring frames for device cooperation, which is proposed by embodiments of the present invention, is described below. Hereinafter, embodiments of the present invention is described by taking a frame structure for IEEE 802.16m or a frame structure for IEEE 802.16p based on the frame structure for IEEE 802.16m as an example, but is not limited thereto. The present invention may be applied to common wireless communication systems.

A UE transmits data and a control signal to a BS in an UL subframe and receives data and a control signal from a BS in a DL subframe through an existing frame structure. Furthermore, a frame structure may be configured by a BS in a cell-specific manner. That is, all UEs within a cell may have the same frame structure configured by a BS.

Meanwhile, as device cooperation technology is introduced, a frame structure needs to be changed. In particular, if device cooperation technology is introduced in UL, an interval in which a cooperative device listens to data and/or a control signal transmitted by a source device is additionally necessary. This region has not been defined in existing frame structures, and thus it is necessary to propose a new frame structure.

Therefore, an embodiment of the present invention proposes a frame configuration method configured in a UE-specific manner unlike in the existing frame structures. The frame structure of at least one of a source device and a cooperative device may be configured in a UE-specific manner. Therefore, if device cooperation technology is introduced, a source device and a cooperative device may have different frame structures. The frame structure of a cooperative device additionally includes an interval in which the cooperative device listens to data and/or a control signal transmitted by a source device. Or, some region of an existing frame structure may be set as the frame of a cooperative device in such a manner that the region is used as a section in which the cooperative device listens to data and/or a control signal transmitted by a source device. The corresponding listening interval may be a DL subframe. In this case, the DL subframe in the frame structure of the cooperative device does not mean an interval in which the cooperative device listens to a signal from a BS, but means an interval in which the cooperative device listens to a signal from a source device. Furthermore, to this end, the corresponding listening interval needs to overlap with an interval in which the source device transmits data and/or a control signal (i.e., an UL subframe).

The interval in which a cooperative device listens to data and/or a control signal transmitted by a source device may be configured in various ways.

(1) The frame structure of a cooperative device may be configured in a UE-specific manner. That is, by configuring the frame structure of the cooperative device in a UE-specific manner, an interval in which the cooperative device listens to data and/or a control signal transmitted by a source device may be configured. The frame structures of a BS and a source device are the same as existing frame structures.

First, a frame structure of a switched cooperative device is described.

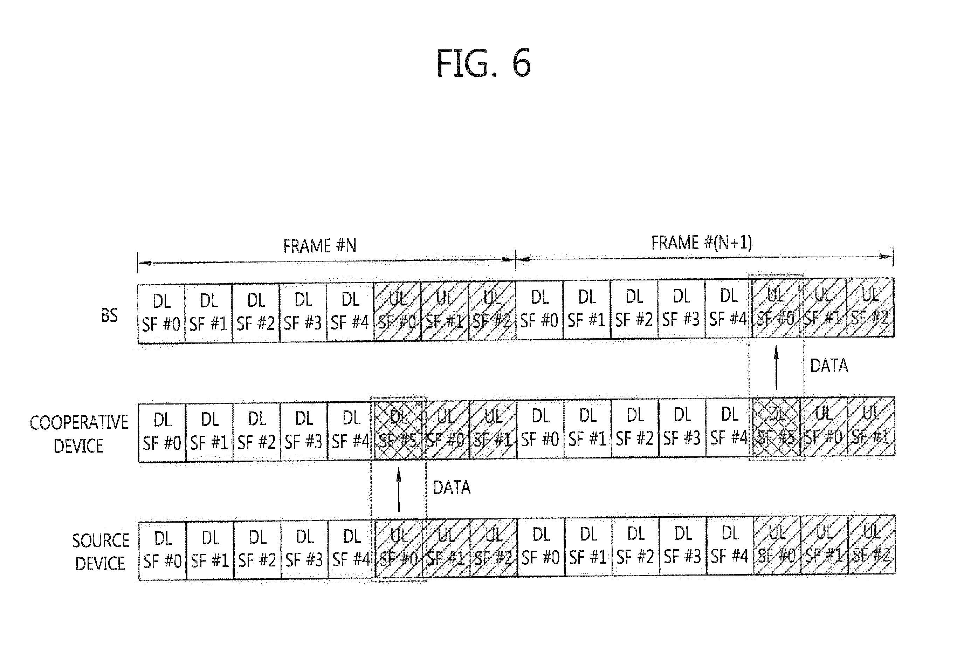

FIG. 6 shows an example of frame structures of a BS, a cooperative device, and a source device according to an embodiment of the present invention.

It is assumed that each of the frame structures of the BS and the source device includes a DL subframes and b UL subframes within one frame. The frame of the cooperative device according to an embodiment of the present invention may include a DL subframes and b UL subframes or (a+n) DL subframes and (b-n) UL subframes within one frame depending on a frame number. Here, n is a natural number smaller than b.

For example, if the frame number is an even number, the frame of the cooperative device includes (a+n) DL subframes and (b-n) UL subframes. The cooperative device receives data and/or a control signal from the source device in the last n DL subframes of the increased DL subframes. If the frame number is an odd number, the frame of the cooperative device includes a DL subframes and b UL subframes. Here, the frame of the cooperative device has the same structure as the frames of the BS and the source device, and the cooperative device transmits the data and/or control signal, received from the source device, to the BS in the first UL subframe. That is, in the frame structure of the cooperative device, the data and/or the control signal is received from the source device in the DL subframe of one frame, and the data and/or the control signal of the source device are transmitted to the BS in the UL subframe of a next frame.

In FIG. 6, it is assumed that a:b=5:3 and n=1. Therefore, each of the frames of the BS and the source device includes 5 DL subframes and 3 UL subframes. The first frame of the cooperative device includes 6 DL subframes and 2 UL subframes. The cooperative device receives data and/or a control signal from the source device in the last DL subframe of the 6 DL subframes. The second frame of the cooperative device includes 5 DL subframes and 3 UL subframes. The cooperative device transfers data and/or a control signal, received from the source device in the first UL subframe of the 3 UL subframes, to the BS.

A frame structure of a non-switched cooperative device is described below.

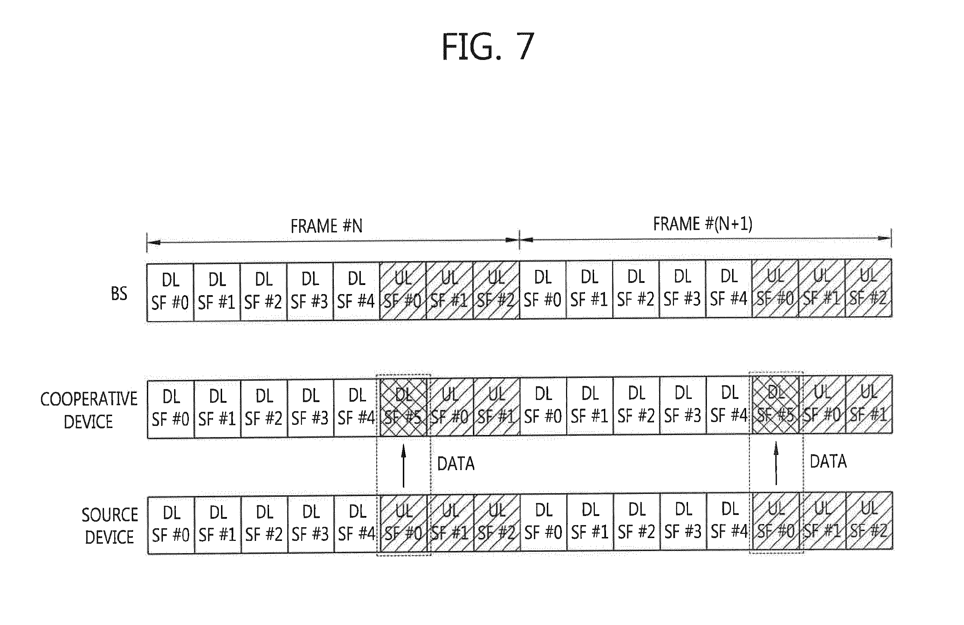

FIG. 7 shows another example of frame structures of a BS, a cooperative device, and a source device according to an embodiment of the present invention.

It is assumed that each of the frame structures of the BS and the source device includes a DL subframes and b UL subframes within one frame. The frame of the cooperative device according to an embodiment of the present invention may include (a+n) DL subframes and (b-n) UL subframes within one frame. Here, n is a natural number smaller than b. The cooperative device receives the data and/or control signal of the source device in the last n DL subframes of the increased DL subframes. The cooperative device may transfer the data and/or control signal, received from the source device, to the BS in any UL subframe of the cooperative device.

In FIG. 7, it is assumed that a:b=5:3 and n=1. Therefore, each of the frames of the BS and the source device includes 5 DL subframes and 3 UL subframes. The frame of the cooperative device includes 6 DL subframes and 2 UL subframes. The cooperative device receives the data and/or control signal of the source device through the last DL subframe of the 6 DL subframes. Furthermore, the cooperative device transfers the data and/or control signal of the source device, received through the 2 UL subframes, to the BS.

(2) The frame structure of a source device may be configured in a UE-specific manner. That is, by configuring the frame structure of a source device in a UE-specific manner, an interval in which a cooperative device receives data and/or a control signal from the source device may be configured. The frame structures of a BS and the cooperative device are the same as existing frame structures.

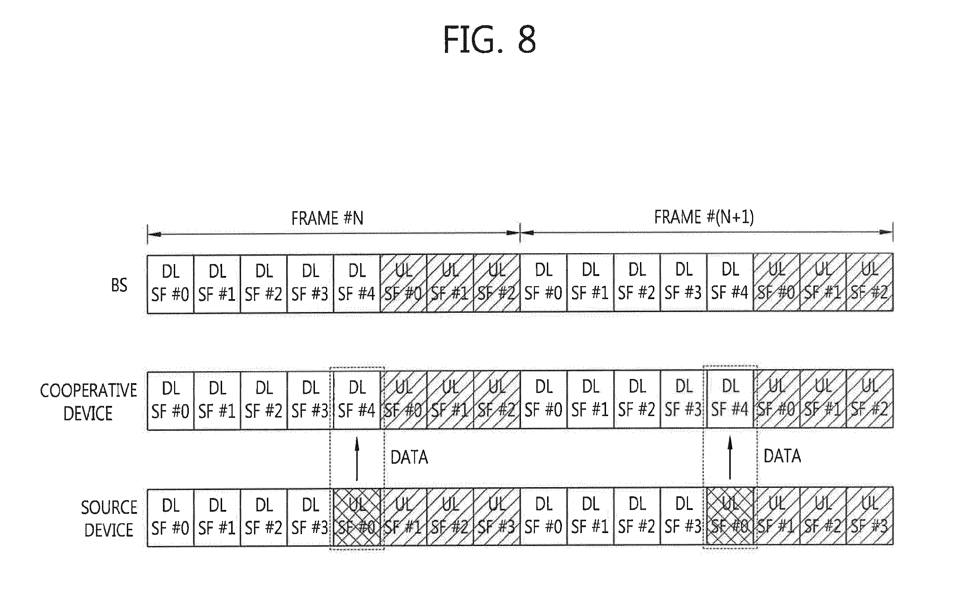

FIG. 8 shows another example of frame structures of a BS, a cooperative device, and a source device according to an embodiment of the present invention.

It is assumed that each of the frame structures of the BS and the cooperative device includes a DL subframes and b UL subframes within one frame. The frame of the source device according to an embodiment of the present invention may include (a-n) DL subframes and (b+n) UL subframes within one frame. Here, n is a natural number smaller than a. The cooperative device receives the data and/or control signal of the source device in the last n DL subframes of the DL subframes. That is, the source device transmits the data and/or the control signal to the cooperative device through the first n UL subframes of the UL subframes. The cooperative device may transfer the data and/or control signal, received from the source device, to the BS in any UL subframe of the cooperative device.

In FIG. 8, it is assumed that a:b=5:3 and n=1. Therefore, each of the frames of the BS and the cooperative device includes 5 DL subframes and 3 UL subframes. The frame of the source device includes 4 DL subframes and 4 UL subframes. The cooperative device receives the data and/or control signal of the source device through the last DL subframe of the 5 DL subframes. Furthermore, the cooperative device transfers the received data and/or control signal of the source device to the BS through the 3 UL subframes.

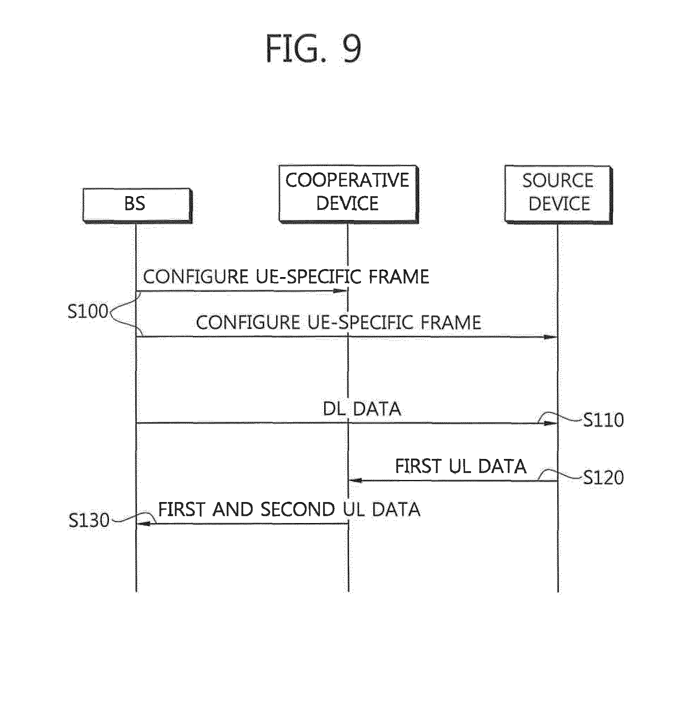

FIG. 9 shows an example of a method of transmitting UL data according to an embodiment of the present invention.

At step S100, a BS configures a UE-specific frame for any one of a source device and a cooperative device. At step S110, the BS transmits DL data to the source device. At step S120, the source device transmits first UL data to the cooperative device. At step S130, the cooperative device transmits the first UL data and its own second UL data to the BS.

(3) Frame-based switching

An interval in which a cooperative device receives data and a control signal from a source device and an interval in which the cooperative device transmits the data and control signal to a BS may be configured for each frame. To this end, a new device state may be defined. OFF duration and ON duration may be defined for the source device. Likewise, OFF duration and ON duration may be defined for the cooperative device.

The source device may operate in a power reduction mode during the OFF duration. The source device does not receive a signal from the BS and does not transmit a signal to the cooperative device. This may be said that the source device has entered a sleep cycle. Furthermore, the source device directly receives a DL signal from the BS and transmits an UL signal to the cooperative device during the ON duration.

An operation of the cooperative device during the OFF duration is different in a DL subframe and an UL subframe. In DL subframes within the OFF duration, the cooperative device may operate in a power reduction mode or may receive a DL control signal for a source device from a BS. In UL subframes within the OFF duration, the cooperative device receives an UL signal from the source device. The UL subframes within the OFF duration may be said to be a listening interval. The cooperative device receives a DL signal from the BS during the ON duration. Furthermore, the cooperative device transmits its own UL signal to the BS during the ON duration and transfers the received UL signal of the source device to the BS during the listening interval within the OFF duration.

In the above description, the listening interval of the cooperative device has been illustrated as being included in the OFF duration of the cooperative device, but the state of the cooperative device may be classified into three states: OFF duration, a listening interval, and ON duration.

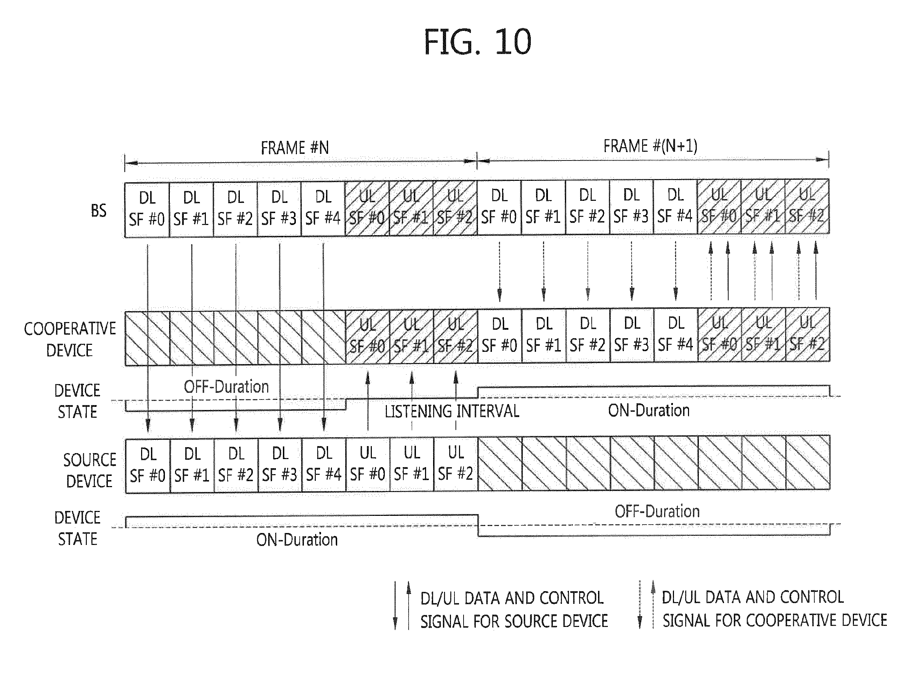

FIG. 10 shows another example of frame structures of a BS, a cooperative device, and a source device according to an embodiment of the present invention.

Referring to FIG. 10, in a frame #N, the state of a source device is set as ON duration, and the state of a cooperative device is set as OFF duration. A BS transmits a DL signal to the source device through the DL subframes of the frame #N. The cooperative device may receive only a control signal, from among DL signals transmitted by the BS. The source device transmits an UL signal to the cooperative device through the UL subframes of the frame #N. The cooperative device receives the UL signal from the source device through the UL subframes of the OFF duration, that is, a listening interval.

In a frame #(N+1), the state of the source device is set as OFF duration, and the state of the cooperative device is set as ON duration. The BS transmits a DL signal to the cooperative device through the DL subframes of the frame #(N+1). The cooperative device transmits its own the UL signal to the BS through the UL subframes of the frame #(N+1) or transfers the UL signal of the source device, received through the listening interval, to the BS.

As described above with reference to FIG. 10, the ON duration of the source device overlaps with the OFF duration of the cooperative device, and the OFF duration of the source device overlaps with the ON duration of the cooperative device. The states of the source device and the cooperative device shown in FIG. 10 may be repeated in subsequent frames.

Meanwhile, in FIG. 10, the number of cooperative devices is assumed to be one, but the number of cooperative devices may be plural. The frame-based switching scheme described with reference to FIG. 10 may be applied to a case where the number of cooperative devices is plural. Here, the states of the plurality of cooperative devices may be alternately set as OFF duration and ON duration. For example, if the number of cooperative devices is 2, a first cooperative device close to the source device in the frame #(N+1) is set as ON duration, and a second cooperative device close to the BS is set as OFF duration. In a frame #(N+3), the first cooperative device is set as OFF duration, and the second cooperative device is set as ON duration.

Meanwhile, a virtual frame number may be defined in addition to the frame number. In the virtual frame number, only frames set as ON duration other than frames set as OFF duration in a source device and a cooperative device are sequentially indexed. That is, assuming that the frame #N is a virtual frame #N for the source device in FIG. 10, a frame #(N+2) becomes a virtual frame #(N+1) because the frame #(N+1) is set as OFF duration. Likewise, assuming that the frame #(N+1) is a virtual frame #N for the cooperative device, a frame #(N+3) becomes a virtual frame #(N+1) because a frame #(N+2) is set as OFF duration.

In DL/UL transmission, a virtual frame number may become a basis on which the transmission of a control signal and data corresponding to the control signal is configured in order of time. For example, timing at which a DL/UL grant and DL/UL data corresponding to the DL/UL grant are transmitted may be configured based on a virtual frame number. Furthermore, the timing of hybrid automatic repeat request (HARQ) acknowledgement/non-acknowledgement (ACK/NACK) feedback and HARQ retransmission corresponding thereto may be configured based on a virtual frame number. This timing relationship is transparent to a device from a viewpoint of a virtual frame number. That is, HARQ timing may be equally applied to a source device and a cooperative device, from a viewpoint of a virtual frame number.

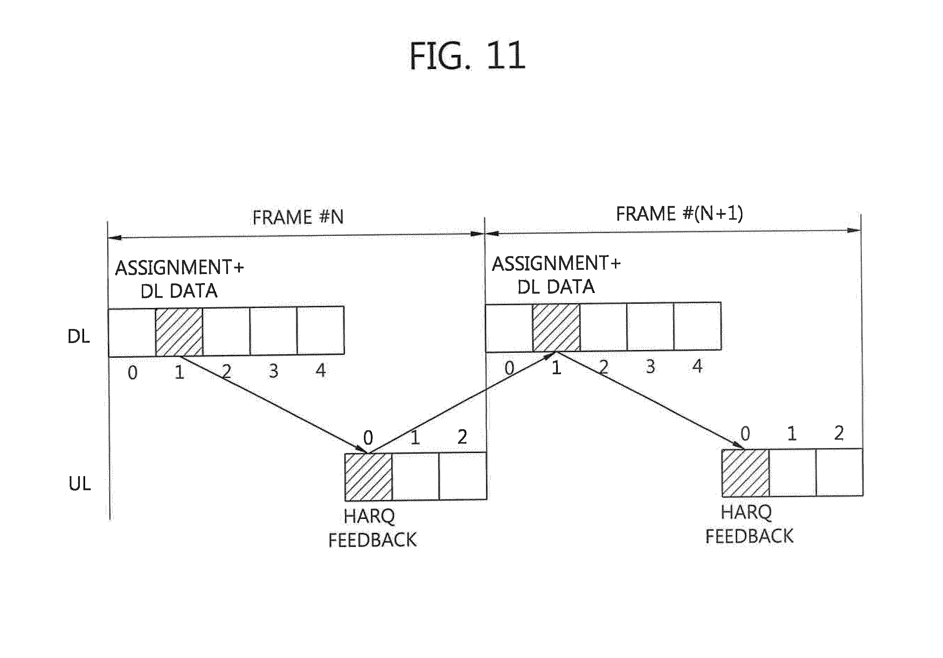

FIG. 11 shows an example of TDD DL HARQ timing in IEEE 802.16m.

Referring to FIG. 11, a DL assignment A-MAP information element (IE) and DL data corresponding to the DL assignment A-MAP IE are transmitted in the second DL subframe of a frame #N. HARQ feedback corresponding to the DL data is transmitted through the first UL subframe of the frame #N. The assignment A-MAP IE and DL data corresponding to the HARQ feedback are transmitted through the second DL subframe of a frame #(N+1). Furthermore, HARQ feedback corresponding to DL data is transmitted through the first UL subframe of the frame #(N+1) again.

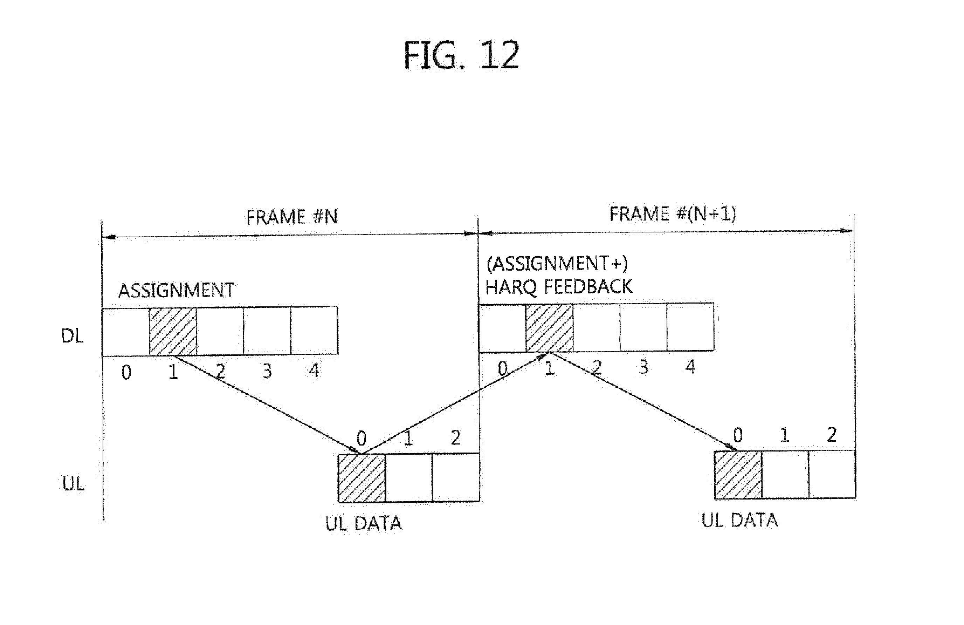

FIG. 12 shows an example of TDD UL HARQ timing in IEEE 802.16m.

Referring to FIG. 12, an UL assignment A-MAP IE is transmitted through the second DL subframe of a frame #N. UL data corresponding to the UL assignment A-MAP IE is transmitted through the first UL subframe of the frame #N. HARQ feedback corresponding to the UL data is transmitted through the second DL subframe of a frame #(N+1). Furthermore, UL data corresponding to HARQ feedback is transmitted through the first UL subframe of the frame #(N+1) again.

DL/UL HARQ timing is described below when the frame-based switching scheme described with reference to FIG. 10 is applied and device cooperation technology is applied.

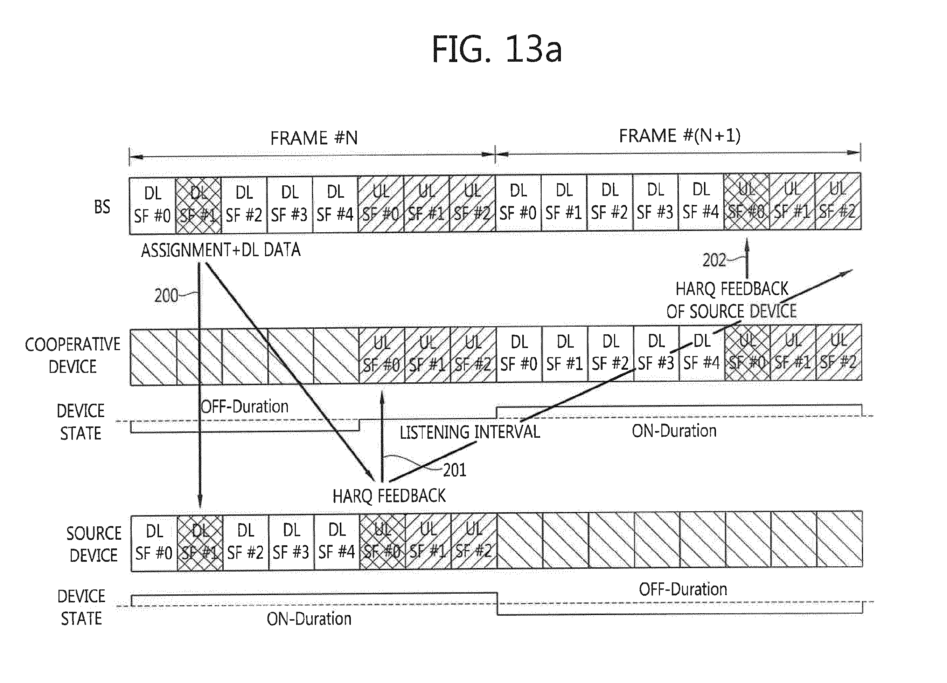

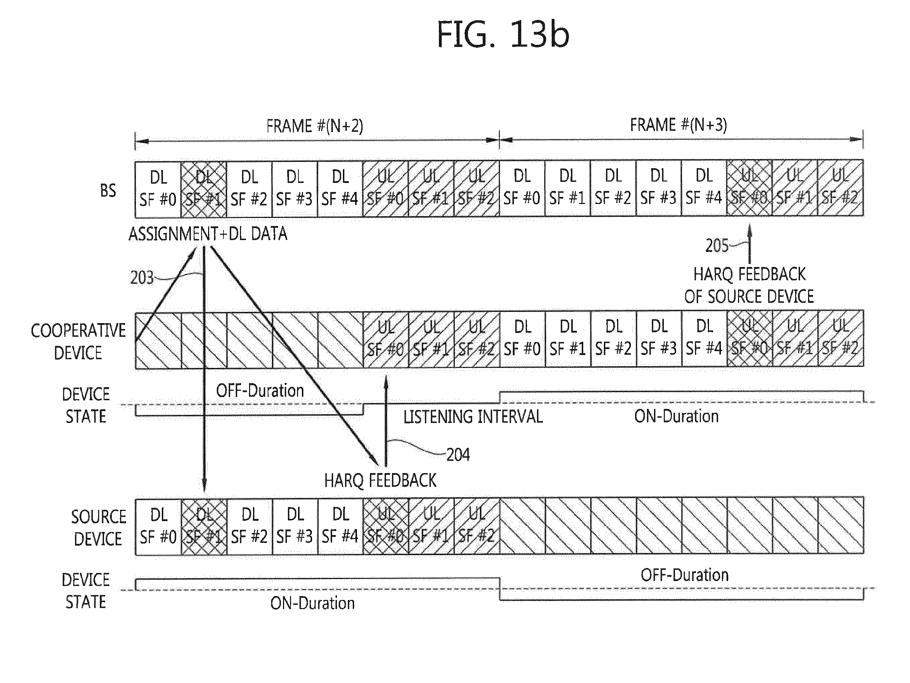

FIG. 13 shows an example of DL HARQ timing of a source device according to an embodiment of the present invention.

In FIG. 13(a), a BS transmits a DL assignment A-MAP IE and DL data, corresponding to the DL assignment A-MAP IE, to a source device through the second DL subframe of a frame #N (200). The source device transmits HARQ feedback, corresponding to the DL data, to a cooperative device through the first UL subframe of the frame #N (i.e., a listening interval) (201). A cooperative device transfers the HARQ feedback, received from the source device, to the BS through the first UL subframe of a frame #(N+1) (i.e., the virtual frame #N of the cooperative device) (202). In FIG. 13(b), if a NACK signal is received as the HARQ feedback, the BS transmits the DL assignment A-MAP IE and DL data, corresponding to the HARQ feedback transmitted by the source device, to the source device through the second DL subframe of a frame #(N+2) (i.e., the virtual frame #(N+1) of the source device) (203). The source device transmits the HARQ feedback, corresponding to the DL data, to the cooperative device through the first UL subframe of the frame #(N+2) (i.e., a listening interval) (204). The cooperative device transfers the HARQ feedback, received from the source device, to the BS through the first UL subframe of a frame #(N+3) (i.e., the virtual frame #(N+1) of the cooperative device) (205).

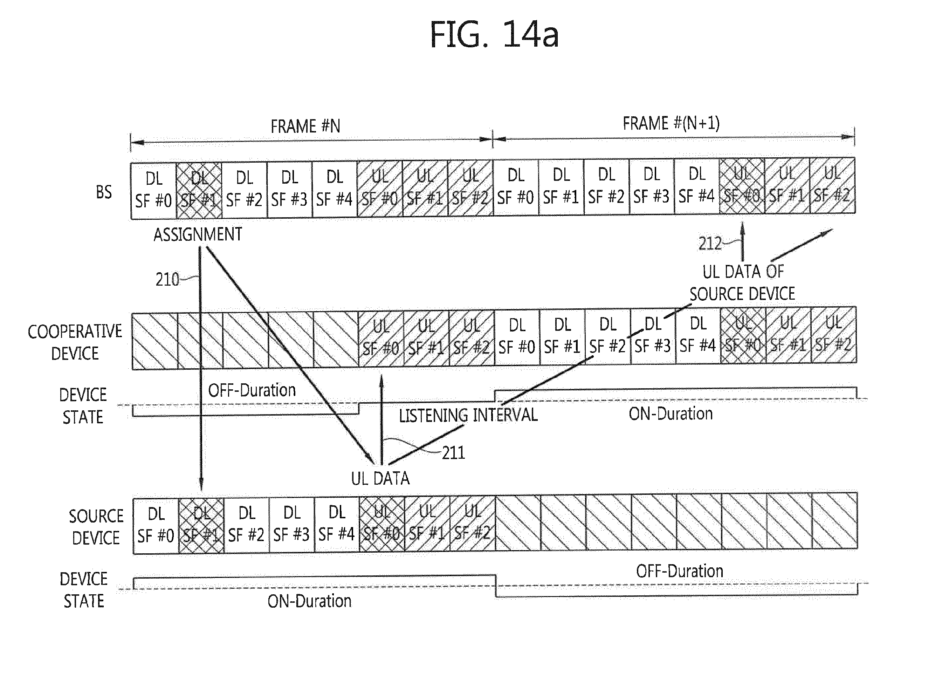

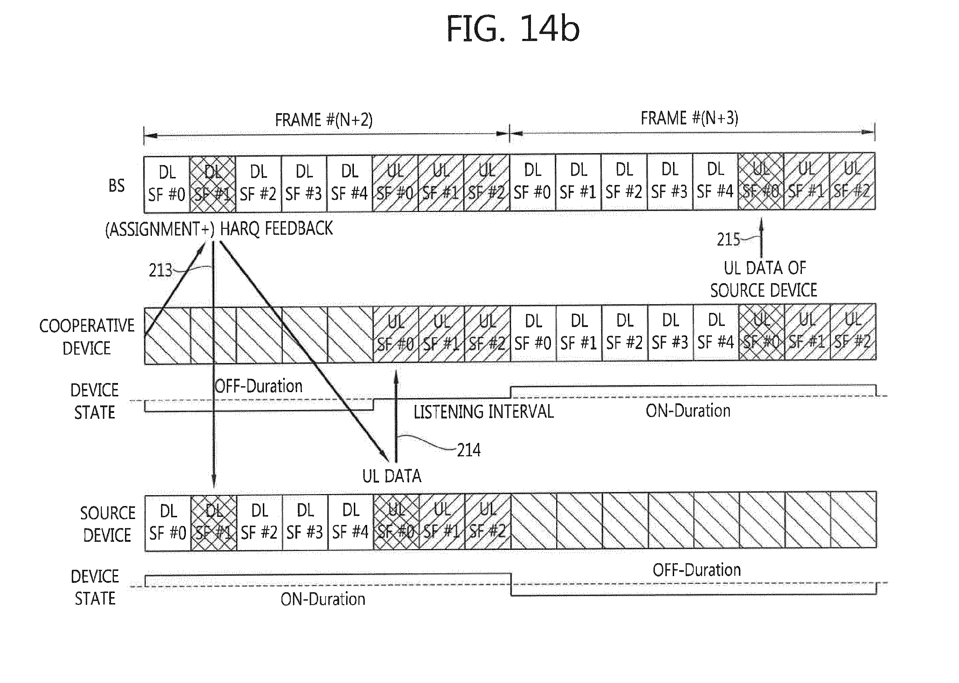

FIG. 14 shows an example of HARQ timing of a source device according to an embodiment of the present invention.

In FIG. 14(a), a BS transmits an UL assignment A-MAP IE to a source device through the second DL subframe of a frame #N (210). The source device transmits UL data, corresponding to the UL assignment A-MAP IE, to a cooperative device through the first UL subframe of the frame #N (i.e., a listening interval) (211). The cooperative device transfers the UL data, received from the source device, to the BS through the first UL subframe of a frame #(N+1) (i.e., the virtual frame #N of the cooperative device) (212). In FIG. 13(b), the BS transmits HARQ feedback, corresponding to the UL data transmitted by the source device, to the source device through the second DL subframe of a frame #(N+2) (i.e., the virtual frame #(N+1) of the source device) (213). If a NACK signal is received as the HARQ feedback, the source device retransmits the UL data, corresponding to the HARQ feedback, to the cooperative device through the first UL subframe of the frame #(N+2) (i.e., a listening interval) (214). The cooperative device transfers the UL data, received from the source device, to the BS again through the first UL subframe of a frame #(N+3) (i.e., the virtual frame #(N+1) of the cooperative device) (205).

In the above description, it has been assumed that a BS performs DL transmission to a source device through a second DL subframe within a frame, the source device performs UL transmission to a cooperative device through a first UL subframe within the frame, and the cooperative device performs UL transmission to the BS through a first UL subframe within a frame, but embodiments of the present invention is not limited thereto. Subframes in which DL transmission and UL transmission are performed may be configured in various ways.

From a viewpoint of a source device based on a virtual frame number, the existing IEEE 802.16m DL/UL HARQ timing of FIGS. 11 and 12 may be applied to a case where device cooperation technology is introduced without change.

Meanwhile, from a viewpoint of a BS based on a virtual frame number, the existing IEEE 802.16m DL/UL HARQ timing may be applied to a case where device cooperation technology is introduced without change except that data and/or HARQ feedback transmitted by a source device are received after one frame through a cooperative device. For example, UL data or HARQ feedback transmitted in a frame #N by a source device may be received in a frame #(N+1) via a cooperative device.

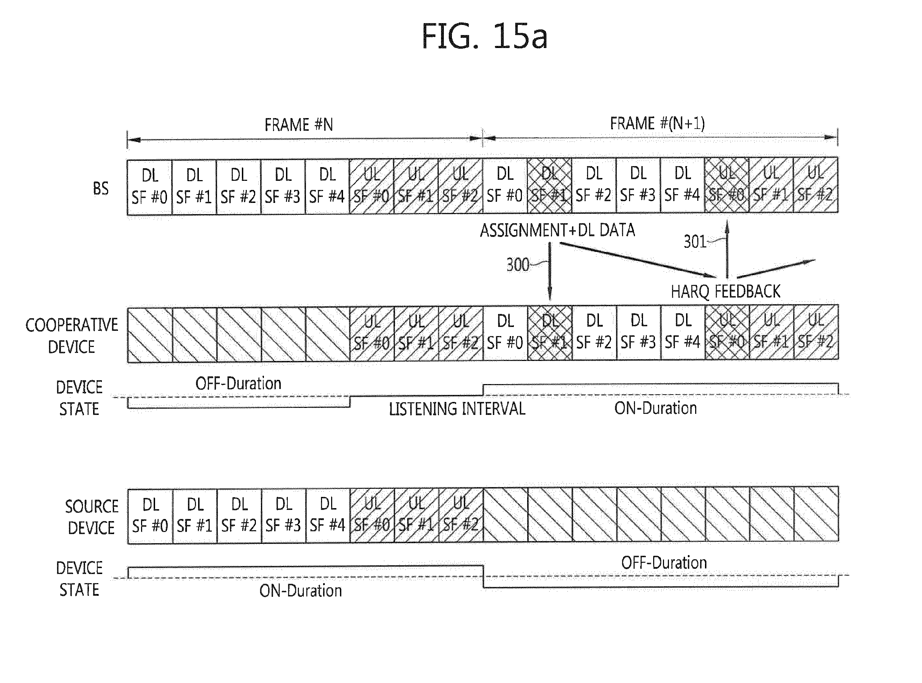

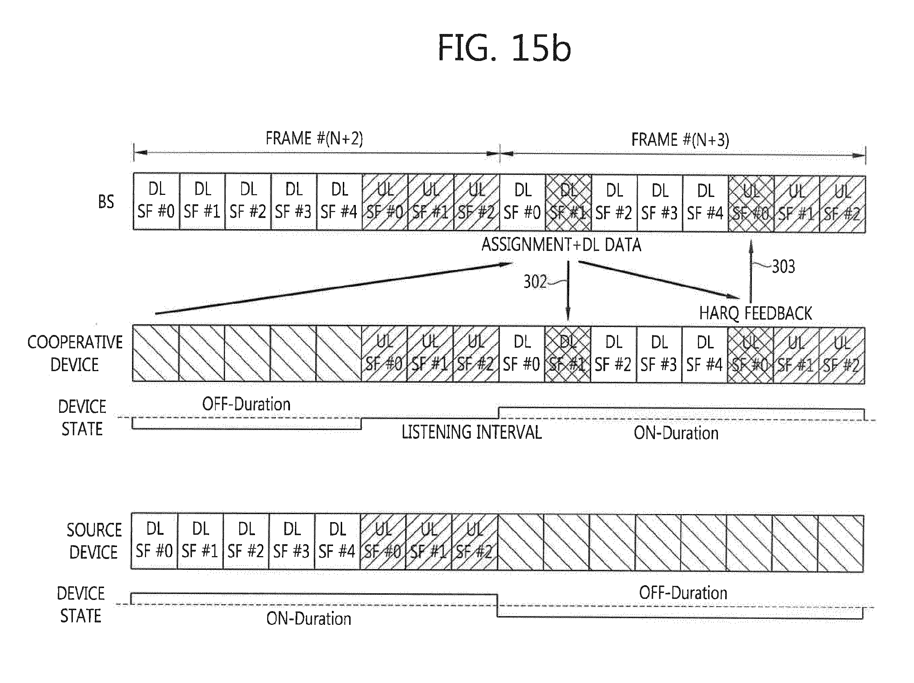

FIG. 15 shows an example of HARQ timing of a cooperative device according to an embodiment of the present invention.

In FIG. 15(a), a BS transmits a DL assignment A-MAP IE and DL data, corresponding to the DL assignment A-MAP IE, to a cooperative device through the second DL subframe of a frame #(N+1) (i.e., the virtual frame #N of the cooperative device) (300). The cooperative device transmits HARQ feedback, corresponding to the DL data, to the BS through the first UL subframe of the frame #(N+1) (301). In FIG. 15(b), when a NACK signal is received as the HARQ feedback, the BS transmits the DL assignment A-MAP IE and DL data, corresponding to the HARQ feedback, to the cooperative device through the second DL subframe of a frame #(N+3) (i.e., the virtual frame #(N+1) of the cooperative device) (302). The cooperative device transmits the HARQ feedback, corresponding to the DL data, to the BS through the first UL subframe of the frame #(N+3) (303).

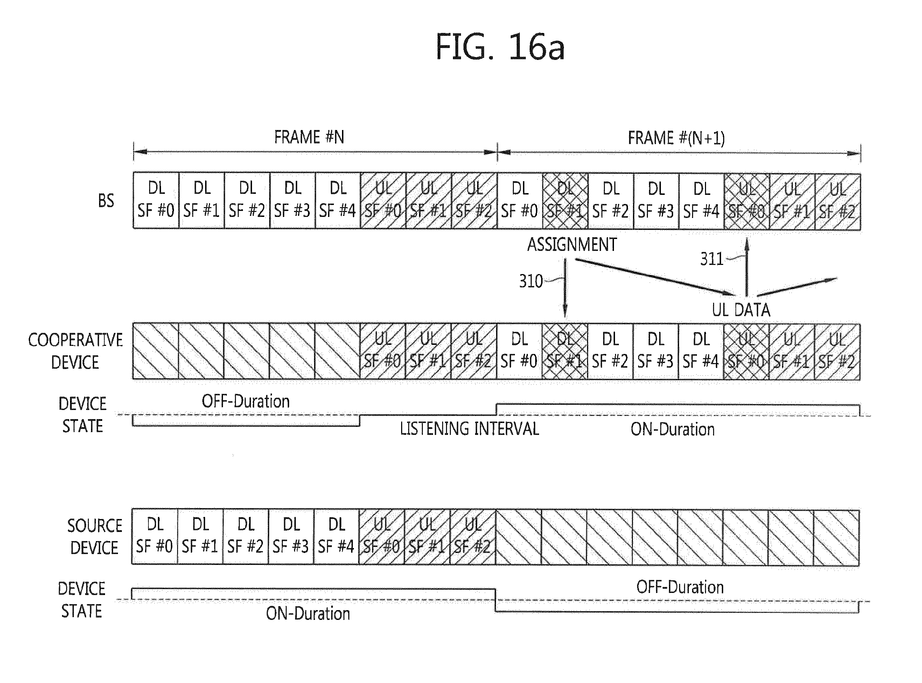

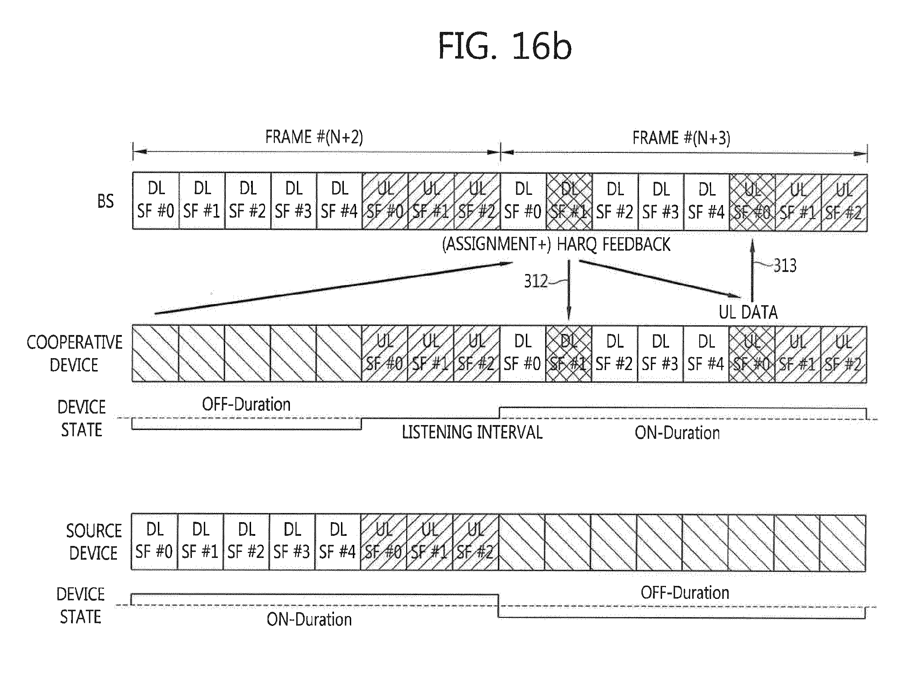

FIG. 16 shows an example of HARQ timing of a cooperative device according to an embodiment of the present invention.

In FIG. 16(a), a BS transmits an UL assignment A-MAP IE to a cooperative device through the second DL subframe of a frame #(N+1) (i.e., the virtual frame #N of the cooperative device) (310). The cooperative device transmits UL data, corresponding to the UL assignment A-MAP IE, to the BS through the first UL subframe of the frame #(N+1) (311). In FIG. 16(b), the BS transmits HARQ feedback, corresponding to the UL data, to the cooperative device through the second DL subframe of a frame #(N+3) (i.e., the virtual frame #(N+1) of the cooperative device) (312). When a NACK signal is received as the HARQ feedback, the cooperative device retransmits the UL data, corresponding to the HARQ feedback, to the BS through the first UL subframe of the frame #(N+3) (303).

In the above description, it has been assumed that a BS performs DL transmission to a cooperative device through a second DL subframe within a frame and the cooperative device performs UL transmission to the BS through a first UL subframe within the frame, but embodiments of the present invention is not limited thereto. Subframes in which DL transmission and UL transmission are performed may be configured in various ways.

From a viewpoint of a cooperative device based on a virtual frame number, the existing IEEE 802.16m DL/UL HARQ timing of FIGS. 11 and 12 may be applied to a case where device cooperation technology has been introduced without change. Furthermore, this is true of a viewpoint of a BS based on a virtual frame number.

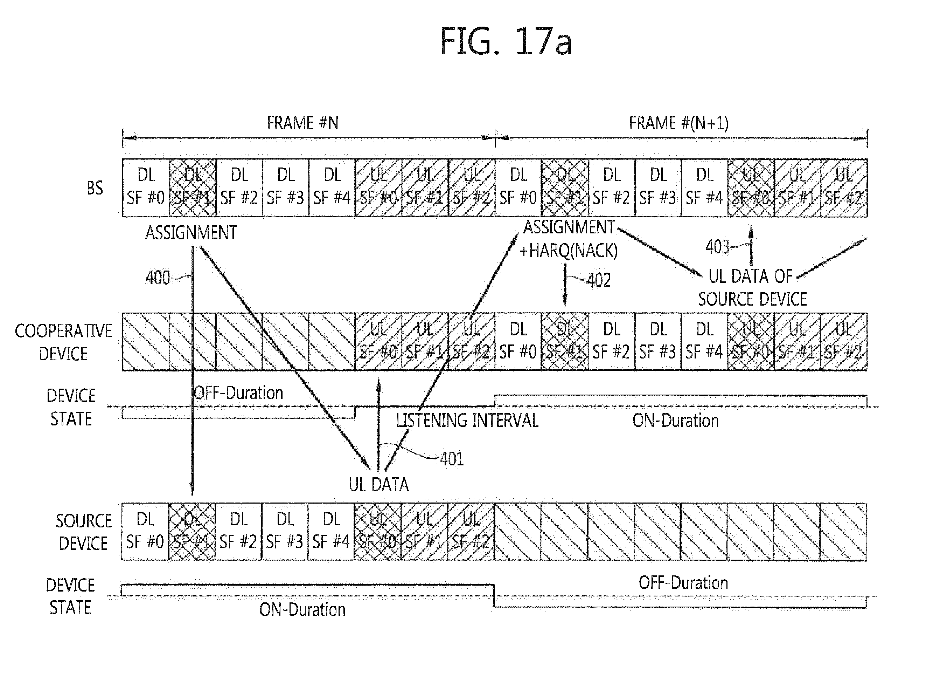

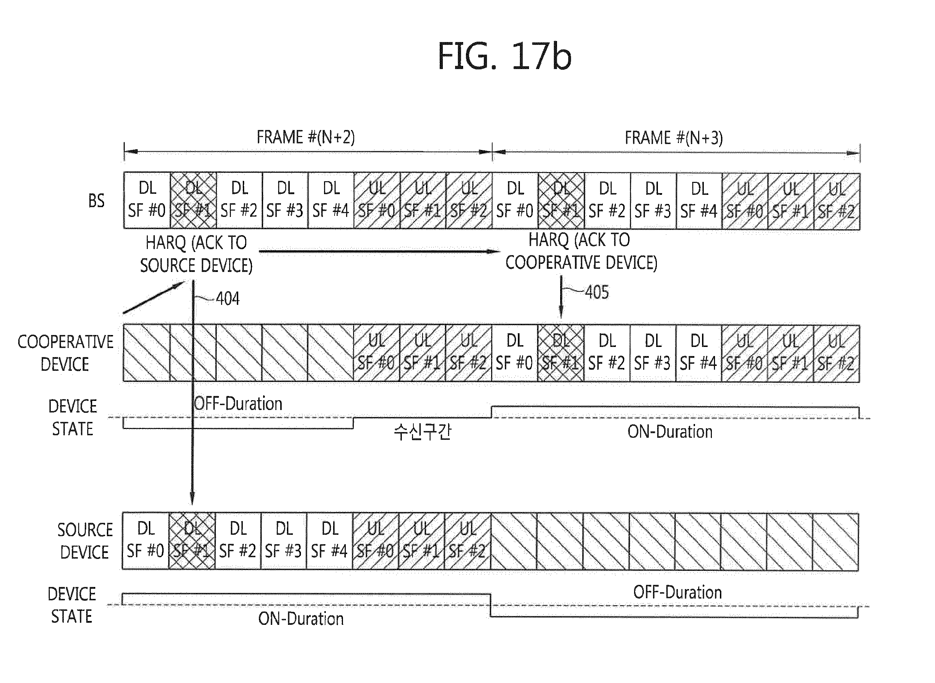

FIG. 17 shows an example of UL HARQ timeline of a source device according to an embodiment of the present invention. FIG. 17 shows a case where a BS has successfully decoded thfe UL data of a source device according to the first transmission of a cooperative device.

In FIG. 17(a), a BS transmits an UL assignment A-MAP IE to a source device through the second DL subframe of a frame #N (400). The source device transmits UL data, corresponding to the UL assignment A-MAP IE, to a cooperative device through the first UL subframe of the frame #N (i.e., a listening interval) (401).

UL resources assigned to the cooperative device so that the cooperative device may transmit the UL data of the source device may be determined according to a non-adaptive HARQ retransmission method. In accordance with the non-adaptive HARQ retransmission method, a cooperative device transmits the UL data of a source device to a BS through the same UL resource region that is the same as a region through which the UL data has been received from the source device in a previous listening interval. This may be checked by a NACK signal transmitted by the BS, or there will be no explicit resource assignment for a corresponding UL resource region according to a DL control channel from the BS. In contrast, an adaptive HARQ transmission method refers to a method in which a BS explicitly assigns UL resources necessary for a cooperative device to transmit the UL data of a source device through a UE-specific DL control channel. UL assignment information necessary to transmit the UL data of the source device is subject to CRC masking by a virtual ID in order to distinguish the UL assignment information from an UL grant that is necessary for the cooperative device to transmit its own UL data and is then transmitted. Or, each UL grant may include an information field indicating whether a corresponding UL grant is for transmitting the data of a cooperative device or transmitting the data of a source device.

In accordance with a non-adaptive HARQ retransmission method, the BS transmits a NACK signal to the cooperative device through the second DL subframe of a frame #(N+1) (i.e., the virtual frame #N of the cooperative device) because the BS has not received the UL data, corresponding to the UL assignment A-MAP IE, from the source device (402). The cooperative device transfers the UL data, received from the source device, to the BS through the first UL subframe of the frame #(N+1) (403).

In FIG. 17(b), since the BS has successfully decoded the UL data of the source device, the BS transmits an ACK signal, corresponding to the UL data received from the source device, to the source device through the second DL subframe of a frame #(N+2) (i.e., the virtual frame #(N+1) of the source device) (404). Furthermore, the BS transmits an ACK signal, corresponding to the UL data received from the source device, to the cooperative device through the second DL subframe of a frame #(N+3) (i.e., the virtual frame #(N+1) of the cooperative device) (405). The BS may transmit the ACK signal to the source device and the cooperative device at the same time.

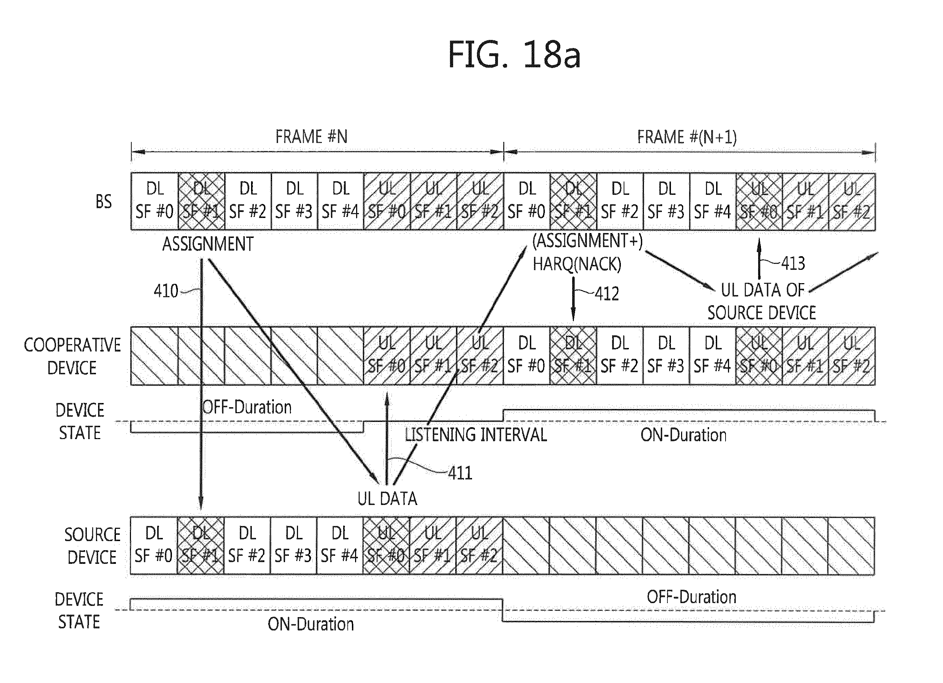

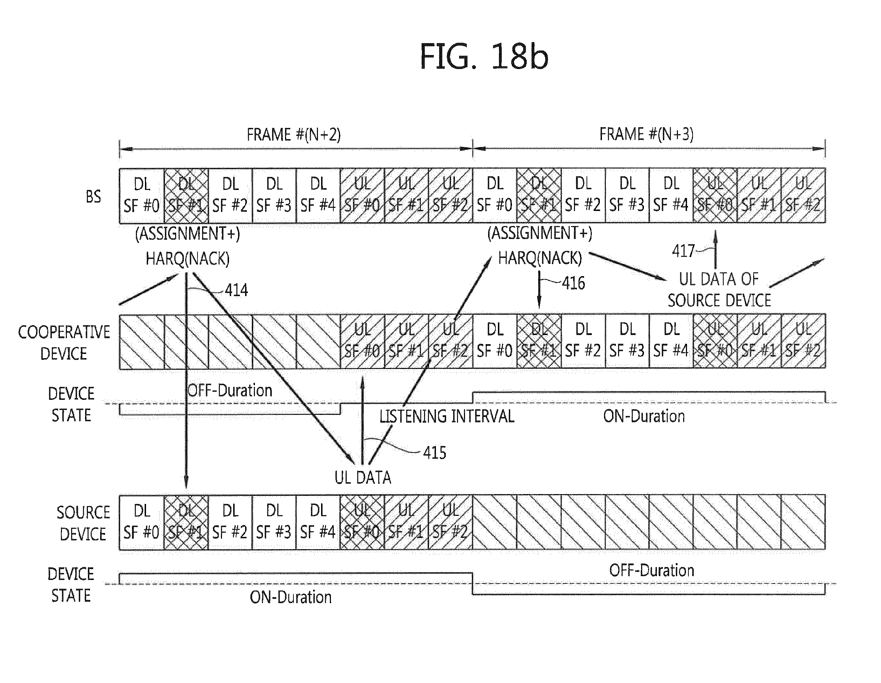

FIG. 18 shows another example of UL HARQ timeline of a source device according to an embodiment of the present invention. FIG. 18 shows a case where a BS has not decoded the UL data of a source device according to the first transmission of a cooperative device.

In FIG. 18(a), a BS transmits an UL assignment A-MAP IE to a source device through the second DL subframe of a frame #N (410). The source device transmits UL data, corresponding to the UL assignment A-MAP IE, to a cooperative device through the first UL subframe of the frame #N (i.e., a listening interval) (411).

Since the BS has not yet received the UL data corresponding to the UL assignment A-MAP IE from the source device, the BS transmits a NACK signal to the cooperative device through the second DL subframe of a frame #(N+1) (i.e., the virtual frame #N of the cooperative device) (412). The cooperative device transfers the UL data, received from the source device, to the BS through the first UL subframe of the frame #(N+1) (413).

A case where a BS has not decoded the UL data of a source device includes the following two cases.

1) A case where a cooperative device does not receive UL data from a source device

Here, the cooperative device may not transmit anything to a BS or may transmit a discontinuous transmission (DRX) signal to the BS through UL resources assigned for UL transmission of the source device. The cooperative device may receive the UL data from the source device again in a next listening interval.

2) A case where a BS does not receive the UL data of a source device from a cooperative device

Here, the source device may retransmit the UL data to the cooperative device because the cooperative device may not receive the UL data retransmitted by the source device in a next listening interval. The cooperative device retransmits the UL data of the source device to the BS after receiving a NACK signal from the BS. Or, the cooperative device may explicitly transmit an ACK signal for the UL data of the source device to the BS, and thus the BS may transmit the ACK signal to the source device.

In FIG. 17(b), since the BS has not successfully decoded the UL data of the source device, the BS transmits a NACK signal, corresponding to the UL data transmitted by the source device, to the source device through the second DL subframe of a frame #(N+2) (i.e., the virtual frame #(N+1) of the source device) (414). The source device retransmits the UL data, corresponding to the NACK signal, to the cooperative device through the first UL subframe of the frame #(N+2) (415).

Since the BS has not yet received the UL data retransmitted by the source device, the BS transmits a NACK signal to the cooperative device through the second DL subframe of a frame #(N+3) (i.e., the virtual frame #(N+1) of the cooperative device) (416). The cooperative device transfers the UL data, received from the source device, to the BS through the first UL subframe of a frame #(N+3) (417).

A method of informing a cooperative device of resource assignment for UL transmission when the frame-based switching scheme described with reference to FIG. 10 is applied and device cooperation technology is applied is described below. This is because both a source device and a cooperative device need to know the UL scheduling information of the source device in order for the cooperative device to receive an UL signal from the source device during OFF duration.

A method of informing a cooperative device of resource assignment for UL data is described first.

As described above with reference to FIG. 10, a cooperative device may know the UL scheduling information of a source device by receiving a DL control signal transmitted from a BS to the source device in the OFF duration of the frame #N. Here, the BS may assign a virtual identifier (ID), shared by the source device and the cooperative device, to the source device and the cooperative device. The virtual ID may be used to transmit a DL control channel including the scheduling information of the source device. The UL scheduling information may be subject to cyclic redundancy check (CRC) masking by the virtual ID and then transmitted. Accordingly, the source device and the cooperative device may detect UL scheduling information. The source device transmits UL data and the cooperative device receives the UL data of the source device according to the detected UL scheduling information.

Or, the UL scheduling information of the source device may be transmitted to each of the source device and the cooperative device. The UL scheduling information of the source device transmitted to the cooperative device may be transmitted in the previous ON duration of the cooperative device. Here, the UL scheduling information of the source device transmitted to the cooperative device may be informed through L1/L2 signaling or higher layer signaling in a UE-specific manner.

A method of informing resource assignment for UL control channel of a cooperative device is described below.

There is an event-triggered UL control channel, such as an HARQ ACK/NACK feedback channel or a bandwidth request channel (BRCH), from among UL control channels. UL HARQ ACK/NACK feedback channel resources assigned for a source device may be informed through L1/L2 signaling or higher layer signaling in the previous ON duration of a cooperative device. In relation to resource assignment for the BRCH, the cooperative device needs to detect a bandwidth request that is transmitted every BRCH configured by a BS in a listening interval.

Furthermore, there is a periodic UL control channel, such as a channel quality indicator (CQI) feedback channel or a sounding reference signal (SRS) channel, from among UL control channels. A cooperative device may be informed of configuration information, such as resource assignment, sequence, and periodicity for a periodic UL control channel, through higher layer signaling.

Meanwhile, if spreading by a UE-ID is applied in order to transmit a UE-specific UL control signal, a common virtual ID may be assigned to a source device and a cooperative device and the UE-specific UL control signal of the source device may be spread by the virtual ID. Furthermore, an event-triggered UL control channel may be directly transmitted to a BS, or only a periodic UL control channel may be transferred to the BS through a cooperative device.

A method of configuring frames according to embodiments of the present invention is described in more detail below.

In accordance with the method of configuring frames according to embodiments the present invention, a first frame structure and a second frame structure may be defined. The first frame structure is a basic frame structure with which all MSs within the coverage of a BS must comply in order to communicate with the BS and may be called an existing cell-specific frame structure. Network entry or network re-entry is performed based on the first frame structure, and cell-specific system information is also broadcasted based on the first frame structure. A cell-specific reference signal (RS) is also transmitted based on the first frame structure. The second frame structure is a UE-specific frame structure supported by a BS. The BS may configure the second frame structure in each MS statically, semi-statically, or dynamically.

A BS may support a plurality of the first frame structures and a plurality of the second frame structures. System information broadcasted by the BS may include information about all the first frame structures or may include information about a first frame structure on which the system information is transmitted. Furthermore, the system information may include information about all the second frame structures supported by the BS or may include information about the second frame structure configured in each MS through UE-specific signaling. Here, the UE-specific signaling may be UE-specific higher layer signaling, a UE-specific MAC management message, or UE-specific L1/L2. Furthermore, each MS operates based on only one first frame structure or second frame structure.

A BS may broadcast one first frame structure through system information. Furthermore, the BS may configure a UE-specific frame structure semi-statically or temporally by reason of device cooperation. The UE-specific frame structure may be transmitted to a corresponding device through UE-specific higher layer signaling or a UE-specific L1/L2 control channel. Configuration information about the UE-specific frame structure may include detailed information about the frame structure. The configuration information about the UE-specific frame structure may further include the activation time of the UE-specific frame structure indicating a point of time at which the UE-specific frame structure starts being applied after corresponding UE receives the configuration information. The configuration information about the UE-specific frame structure may further include duration indicating how long the UE operates based on the UE-specific frame structure after the activation time.

Or, a BS may broadcast all supported first frame structures and/or second frame structures. Furthermore, the BS may configure a UE-specific frame structure semi-statically or temporally by reason of device cooperation. The UE-specific frame structure may be transmitted to a corresponding device through UE-specific higher layer signaling or a UE-specific L1/L2 control channel. Here, configuration information about the UE-specific frame structure may include information about the index of a frame structure selected from the broadcasted frame structures. Furthermore, the configuration information about the UE-specific frame structure may further include the activation time of the UE-specific frame structure indicating a point of time at which the UE-specific frame structure starts being applied after corresponding UE receives the configuration information. The configuration information about the UE-specific frame structure may further include duration indicating how long the UE operates based on the UE-specific frame structure after the activation time.

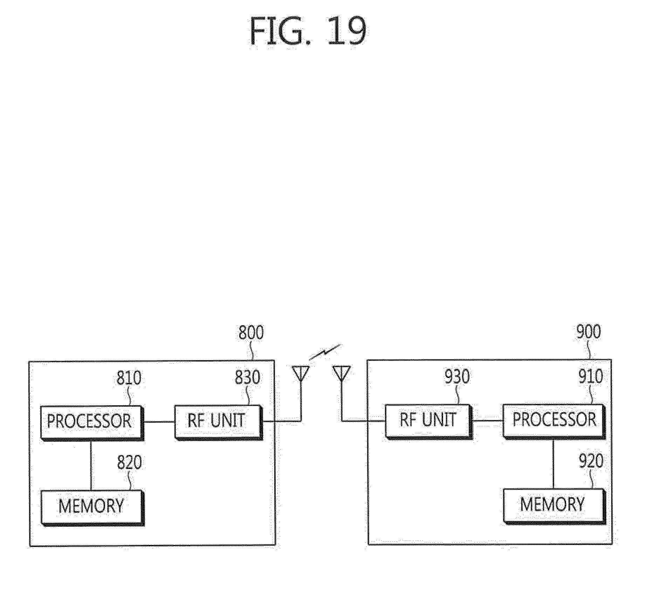

FIG. 19 is a block diagram showing wireless communication system to implement an embodiment of the present invention.

A BS 800 may include a processor 810, a memory 820 and a radio frequency (RF) unit 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The RF unit 830 is operatively coupled with the processor 810, and transmits and/or receives a radio signal.

An M2M device 900 may include a processor 910, a memory 920 and a RF unit 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The RF unit 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The RF units 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope and spirit of the present disclosure.

What has been described above includes examples of the various aspects. It is, of course, not possible to describe every conceivable combination of components or methodologies for purposes of describing the various aspects, but one of ordinary skill in the art may recognize that many further combinations and permutations are possible. Accordingly, the subject specification is intended to embrace all such alternations, modifications and variations that fall within the spirit and scope of the appended claims.

## Claims

1. A method of a transmitting, by a cooperative device, uplink (UL) data in a wireless communication system, the method comprising:
receiving UL data from a source device through a listening interval configured within a TDD frame of the cooperative device, and
transmitting the UL data, received from the source device, to a base station through a UL subframe within the TDD frame of the cooperative device,
wherein the listening interval overlaps with a UL subframe within a TDD frame of the source device.

2. The method of claim 1, wherein the TDD frame of the cooperative device is configured by the base station in a user equipment (UE)-specific manner.

3. The method of claim 2, wherein a number of DL subframes within the TDD frame of the cooperative device is n greater than a number of DL subframes within the TDD frame of the source device, and
wherein a number of the UL subframes within the TDD frame of the cooperative device is n smaller than the number of DL subframes within the TDD frame of the source device.

4. The method of claim 3, wherein the listening interval is last n DL subframes within the TDD frame of the cooperative device.

5. The method of claim 3, wherein the UL data is received from the source device in an even-numbered frame, and
wherein the UL data received in the even-numbered frame is transmitted to the base station in an odd-numbered frame.

6. The method of claim 2, wherein a number of DL subframes within the TDD frame of the cooperative device is n smaller than a number of DL subframes within the TDD frame of the source device, and
wherein a number of the UL subframes within the TDD frame of the cooperative device is n greater than the number of DL subframes within the TDD frame of the source device.

7. The method of claim 6, wherein the listening interval is last n DL subframes within the TDD frame of the cooperative device.

8. The method of claim 1, wherein the TDD frame of the cooperative device is divided into OFF duration and ON duration,
wherein the listening interval is an UL subframe within the ON duration of the TDD frame of the cooperative device, and
wherein the OFF duration is duration in which data cannot be transmitted and the ON duration is duration in which data can be transmitted.

9. The method of claim 8, wherein the OFF duration and the ON duration of the TDD frame of the cooperative device are configured for each frame.

10. The method of claim 8, wherein the OFF duration of the TDD frame of the cooperative device overlaps with ON duration of the TDD frame of the source device, and
wherein the ON duration of the TDD frame of the cooperative device overlaps with OFF duration of the TDD frame of the source device.

11. The method of claim 8, further comprising receiving a non-acknowledgement (NACK) signal, corresponding to the UL data, from the base station during the ON duration within the TDD frame of the cooperative device before transmitting the UL data received from the source device to the base station.

12. The method of claim 11, further comprising receiving an acknowledgement (ACK) signal, corresponding to the UL data transmitted to the base station, from the base station during the ON duration within the TDD frame of the cooperative device.

13. The method of claim 11, further comprising receiving a NACK signal, corresponding to the UL data transmitted to the base station, from the base station during the ON duration within the TDD frame of the cooperative device.

14. The method of claim 13, further comprising:
receiving retransmission data of the UL data from the source device through the listening interval, and
retransmitting the retransmission data to the base station through the ON duration within the TDD frame of the cooperative device.

15. A cooperative device in a wireless communication system, the cooperative device comprising:
a radio frequency (RF) unit transmitting or receiving a radio signal; and
a processor coupled with the RF unit, and configured for:
receiving UL data from a source device through a listening interval configured within a TDD frame of the cooperative device, and
transmitting the UL data, received from the source device, to a base station through a UL subframe within the TDD frame of the cooperative device,
wherein the listening interval overlaps with a UL subframe within a TDD frame of the source device.
